# EUROPEAN PATENT APPLICATION

(11) **EP 3 385 820 A1**
(43) Date of publication of application: **10.10.2018**
(21) Application number: 17164737.3
(22) Date of filing: 04.04.2017
(51) Int. Cl.: G06F 3/01, G06T 19/00

(54) **SYSTEM AND METHOD FOR AN INDUSTRIAL SIMULATION OF AN OBJECT USING AN INDEXED TRANSITION BETWEEN VISUAL OBJECT MODELS OF THE OBJECT**

(71) Applicant: Siemens Aktiengesellschaft, 80333 München (DE)
(72) Inventor: Weng, Wenrong, 81825 München (DE)

(57) **Abstract**

A system for an industrial simulation of an object using an indexed transition between visual object models of the object is suggested. The system includes an index table for storing a number N of predicted visual object models of the object and a number N of indexes allocated to the predicted visual object models, a representation unit for representing an actual visual object model of the visual object models to a user, an input unit for receiving a user input for changing the actual visual object model represented to the user, a determination unit for determining a transition information indicating an indexed transition from a first index allocated to the actual visual object model to a second index allocated to a following visual object model, and a providing unit for providing the following visual object model from the index table to the representation unit using the determined transition information.

Further, a method and a computer program product are suggested.

## Description

The present invention relates to a system for an industrial simulation of an object using an indexed transition between visual object models of the object. The present invention further relates to a method and to a computer program product for an industrial simulation of an object using an indexed transition between visual object models of the object.

Virtual reality (VR) applications for industrial simulations of objects gain rapidly increasing interest in many industry segments, for example. Lots of industry design and simulation move from traditional hardware mockup into fully digitalized virtual reality. A conventional product prototyping starts from CAD-design, hardware mocking-up, first-line tests, custom presentation, user feedback, redesign of CAD-models, and so on. Therefore, a traditional prototyping life cycle is not only very expensive, but also takes a long time. In order to speed up this procedure and to reduce the costs in the meantime, virtual reality provides a platform to let design engineers, simulation experts and customers come together. To this end, a low latency visual feedback in response of any inputs may build up a key factor of such an interactive system. However, both to CAD-design and physics simulation, each reconstruction of shape, material choice and physical behaviors in response to its working environment are complicated enough so that the calculation of final visual results may often take a heavy overhead to process. Conventionally, such an impact on visual feedback may get unmanageable.

In the current state of computer graphics, for example, ParaView, an open source project for three-dimensional visualization for industrial application, may take from seconds to hours to calculate final visual results or to provide a fine mesh for photorealistic rendering. This may break down a virtual reality application in a normal case.

It is an object of the present invention to enhance the industrial simulation of an object.

According to a first aspect, a system for an industrial simulation of an object using an indexed transition between visual object models of the object is suggested. The system includes an index table for storing a number N of predicted visual object models of the object and a number N of indexes allocated to the predicted visual object models, a representation unit for representing an actual visual object model of the visual object models to a user, an input unit for receiving a user input for changing the actual visual object model represented to the user, a determination unit for determining a transition information indicating an indexed transition from a first index allocated to the actual visual object model to a second index allocated to a following visual object model, and a providing unit for providing the following visual object model from the index table to the representation unit using the determined transition information.

Using indexed transitions of predicted visual object models enables not only seamless interactive operation visually, but provides a consistent feedback behavior, in particular also over a network. In other words, the used indexed transition of predicted visual object models provides an index-based prediction of intermediate simulation results of the object. Therefore, a latency-free visual feedback, in particular of heavy simulation operations, may be provided to the user. In particular, in one simulation, a plurality of indexed transitions between visual object models are performed to provide a seamless and rapid user feedback.

The present index-based visualization of simulation results of the object achieves a better user experience of industrial simulation, in particular of virtual reality applications for industrial simulations, for example applied for both CAD prototyping and physics simulation.

In particular, the system may be a computer-aided or computer-related system or a computer system. The industrial simulation may be a virtual reality (VR) simulation or an augmented reality (AR) simulation, for example. The object may be a vehicle, a car, a dishwasher, or the like. In particular, the index table is a table or a memory that uses indexes. The index may be called memory index, table index or database index. The index is a data structure that improves the speed of data retrieval operations in a table or database at the cost of additional writes and storage space to maintain the index data structure. The indexes are used to quickly locate data without having to search every row in the table every time the table is accessed. For example, the index may be a copy of selected columns of data from the table that can be searched very efficiently.

The predicted visual object models may be pre-calculated visual object models of the object. The representation unit may include virtual reality glasses and/or augmented reality glasses, for example. The input unit may include a dataglove and/or a three-dimensional mouse.

The determination unit may include an algorithm unit which takes a set of parameters triggered by input from the input unit, and calculates the right index as the output. The index may be used to query the predicted visual object models stored in the index table. In particular, indexed mesh objects may serve as the results of prediction, where a simulation server is configured to work on final results.

In the following, several embodiments of the industrial simulation of an object using indexed transitions between visual object models of the object are described.

According to an embodiment, the index table is configured to store at least one certain allocated index for each of the predicted visual object models.

In particular, the mapping between index and predicted visual object model may be bijective.

According to a further embodiment, each of the predicted visual object models is mapped to a set of parameters relevant for a simulation of the visual object model and its optical adaptation for the representation unit.

In particular, the set of parameters that are relevant to the simulation and its optical adaptation may be dependent on the variety of simulations. The index table may then map the predicted visual objects to said variety of the predefined parameters. Furthermore, depending on the simulation scale, the size of such index tables including a number of predicted visual object models may quickly exceed the memory space available to a client device, like a mobile device. For such a case, the index table may include several caches or prediction tables that are separated to a client device and to a server device.

According to a further embodiment, the representation unit and the input unit are configured to provide a direct interaction for the user with the actual visual object model represented by the representation unit.

By means of the representation unit and the input unit, the user has the possibility of a direct interaction with the actually presented visual object model and in particular its changes. In this regard, the indexed visual transition between a user-defined sequence of visual object models provides a rapid user feedback.

According to a further embodiment, the system comprises a client device and a server device, wherein the client device integrates the representation unit and the determination unit, and wherein the server device includes the providing unit and at least a part of the index table.

In particular, the server device has higher computing facilities, in particular higher processing power and memory capacities than the client device. Thus, calculations that need a high processing power may be done by the server device, and the results of the calculation may then be provided from the server device to the client device. Therefore, run time capabilities may be then achieved and may be less restricted to the capability of processing power or a simulation power of the client device.

According to a further embodiment, the server device and the client device are coupled by a remote connection.

The remote connection may be a wireless connection, e.g. provided by WiFi. Additionally or alternatively, the remote connection may use the Internet or a local area network.

An advantage of using the predicted index table of visual results, e. g. of CAD-design for prototyping and physics simulation, in a progressive manner grants smooth visual state transitions and a best user experience of interactivities. In particular for a multi-user network cooperative simulation, the used index table may reduce network traffic, since only the indexes need to be updated, and updating of visual objects just takes place once, in particular at the server device.

Moreover, the system may include one server device and a plurality of client devices coupled to the server device by a remote connection. The respective client device may be a mobile device. The server device may be a simulation server. Besides the visual transition over index, the simulation server may be configured to finalize the visual presentation of the target model.

According to a further embodiment, the input unit includes a dataglove and/or a 3D mouse.

A dataglove, also called wired glove or cyberglove, is an input device for a human-computer interaction worn like a glove. The dataglove may include various sensor technologies for capturing physical data such as the bending of fingers.

According to a further embodiment, the representation unit includes virtual reality glasses.

According to a further embodiment, the representation unit includes augmented reality glasses.

According to a further embodiment, the index table is configured to use at least two levels of indexing for a coarser change of neighbored visual object models of the object and for a finer change of neighbored visual object models of the object.

According to a further embodiment, the index table includes a first cache and a second cache. The first cache is configured for a first level of indexing of the two levels for the coarser change of neighbored visual object models. Moreover, the second cache is configured for a second level of indexing of the two levels for the finer change of neighbored visual object models.

In particular, the cache may be a prediction table. By introducing multiple levels of indexed caching using said caches or prediction tables, more progressively predictive results are possible for the client device which may have limited memory space available compared to the server device. The client device may be a mobile device, for example. For the example of two levels of indexing, one may manage the coarser visual results that may be kept on the client device and the other for finer results located on the server device. Both, the coarser and finer results may provide the intermediate results of the final simulation results. The visual effects may then be improved gradually until the final results arrive. Such a progressive visual improvement of simulation may provide a realistic feedback of real-time industrial design and prototyping and may build up key factors of an interactive and remote cooperative VR application. As mentioned above, the separation of the caches or prediction tables to the client device and the server device may render also mobile devices being capable of a simulation terminal.

According to a further embodiment, the first cache is integrated in the client device and the second cache is integrated in the server device.

According to a further embodiment, the visual object model is a two-dimensional visual object model or a three-dimensional visual object model.

Particularly, the visual object model may include a fine mesh of photo-realistic rendering, e.g. CAD-designs or CAD-models.

According to a further embodiment, the system includes an updating unit for updating the index table based on user inputs received by the input device and/or based on an update information received from an external entity.

According to this embodiment, an improvement of intermediate results may be quickly achieved by updating the index table and the particularly related ready mesh objects.

The respective unit, e.g. the determination unit or the providing unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to a second aspect, a method for an industrial simulation of an object using an indexed transition between visual object models of the object is suggested. The method comprises the following steps:
storing a number N of predicted visual object models of the object and a number N of indexes allocated to the predicted visual object models in an index table,
representing an actual visual object model of the visual object models to a user by a representation unit,
receiving a user input for changing the actual visual object model represented to the user by an input unit,
determining a transition information indicating an indexed transition from a first index, allocated to the actual visual object model, to a second index, allocated to a following visual object model, and
providing the following visual object model from the index table to the representation unit using the determined transition information.

The embodiments and features according to the first aspect are also embodiments of the second aspect.

According to a third aspect, a computer program product is suggested, wherein the computer program product comprises a program code for executing the method of the second aspect or of one of the embodiments of the second aspect when the program code is run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:
- Fig. 1: shows a schematic block diagram of a first embodiment of a system for an industrial simulation of an object using an indexed transition between visual object models of the object;
- Fig. 2: shows an example of an index table of the system of Fig. 1;
- Fig. 3: shows a schematic block diagram of a second embodiment of a system for an industrial simulation of an object using an indexed transition between visual object models of the object; and
- Fig. 4: shows a sequence of method steps of an embodiment of a method for an industrial simulation of an object using an indexed transition between visual object models of the object.

In the Figures, like reference numerals designate like or functionally equivalent elements, unless otherwise indicated.

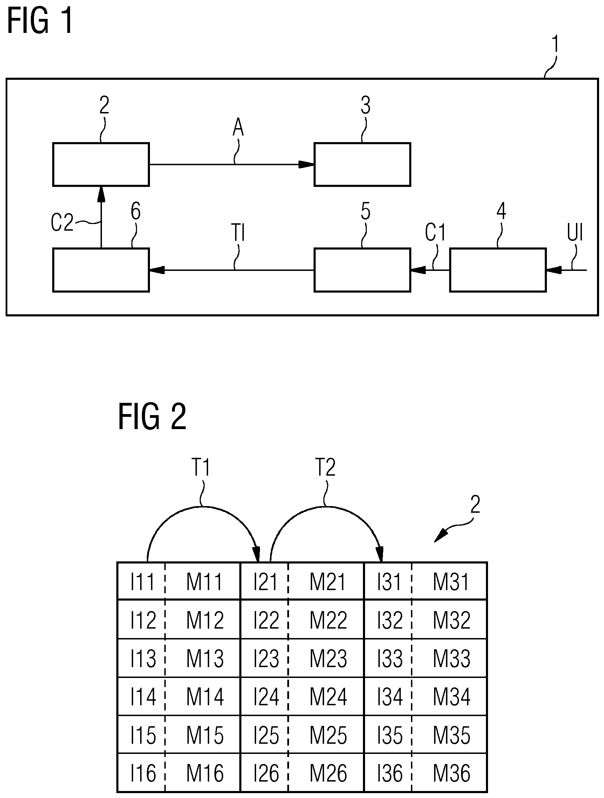

Fig. 1 shows a schematic block diagram of a first embodiment of a system 1 for an industrial simulation of an object using an indexed transition between visual object models of the object.

The system 1 of Fig. 1 has an index table 2, a representation unit 3, an input unit 4, a determination unit 5 and a providing unit 6.

The index table 2 is configured to store a number N of predicted visual object models M11 - M36 of the object and a number N of indexes I11 - 136 allocated to the predicted visual object models M11 - M36 (see Fig. 2, for example). For example, the object is a vehicle, like a car. The visual object models M11 - M36 are two-dimensional visual object models or three-dimensional visual object models, for example.

In particular, the index table 2 is configured to store at least one certain allocated index I11 - 136 for each of the predicted visual object models M11 - M36. In this regard, Fig. 2 shows an example of such an index table 2. Without loss of generality, the index table 2 of Fig. 2 shows 18 predicted visual object models M11 - M36, which are arranged in six rows and three columns of said index table 2. To each of said predicted visual object model M11 - M36, a corresponding index I11 - 136 is allocated. For example, the index I11 is allocated to the predicted visual object model M11, and the index 121 is allocated to the predicted visual object model M21, and so on.

In particular, each of the predicted visual object models M11 - M36 is mapped to a set of parameters relevant for simulation. The representation unit 3 is configured to represent an actual visual object model A of the visual object models M11 - M36 to a user. For example, the representation unit 3 includes virtual reality glasses or augmented reality glasses.

The input unit 4 is configured to receive a user input UI for changing the actual visual object model A represented to the user. For example, the user input unit 4 is a dataglove. By means of the dataglove, the user may change aspects of the represented actual visual object model A. These changes done by the user are received as a user input UI which is configured to change the represented actual visual object model A.

Moreover, the determination unit 5 is configured to determine a transition information TI indicating an index transition T1, T2 from a first index I11 (for example shown in Fig. 2) allocated to the actual visual object model A to a second index 121 (for the example shown in Fig. 2) allocated to a following visual object model M21 (for example shown in Fig. 2).

By means of the determined transition information TI, the providing unit 6 may provide the following visual object model from the index table 2 to the representation unit 3. Then, the representation unit 3 may represent the received following visual object model, wherein the change to the following visual object model was triggered by the user input UI done by the user.

In other words, with reference to Fig. 1, the user changes the represented actual visual object model A. As a result, the input unit 4 receives a user input UI and provides a first command C1 that is generated based on said user input UI and provides said first command CI to the determination unit 5. The determination unit 5 determines a transition information TI for said indexed transition and provides the transition information TI to the providing unit 6. The providing unit 6 is configured to provide the following visual object model from the index table 2 to the representation unit 3 using a second command C2 that is generated based on the received transition information T1.

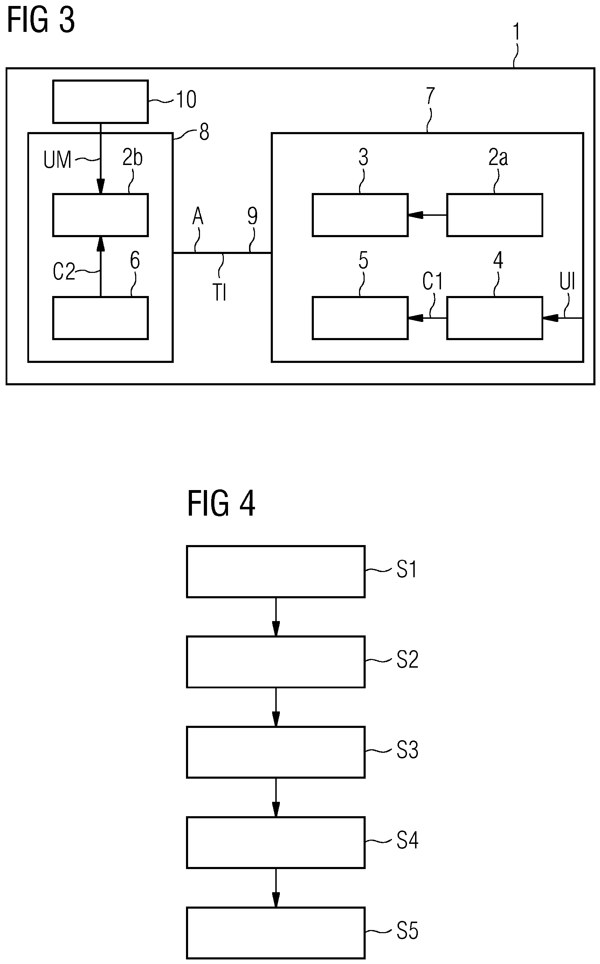

Fig. 3 shows a schematic block diagram of a second embodiment of the system 1 for industrial simulation of an object using an indexed transition between visual object models M11 - M36 of the object. The second embodiment of Fig. 3 is based on the first embodiment of Fig. 1 and includes all features of the first embodiment of Fig. 1.

Furthermore, the second embodiment of the system 1 of Fig. 3 includes a client device 7 and a server device 8. The client device 7 of Fig. 3 integrates the representation unit 3, the input unit 4 and the determination unit 5 and is, for example, a mobile device.

On the other hand, the server device 8 of Fig. 3 integrates a part 2b of the index table 2 and the providing unit 6.

In the second embodiment of Fig. 3, the index table 2 is formed by a first cache 2a and a second cache 2b. The first cache 2a is integrated in the mobile client device 7, and the second cache 2b is integrated in the server device 8.

The first cache 2a is configured for a first level of indexing for a coarser change of neighbored visual object models M11 - M36. In contrast, the second cache 2b is configured for a second level of indexing for a finer change of neighbored visual object models M11 - M36. For providing said finer change of neighbored visual object models, a higher memory capacity is necessary. As a result, the second cache 2b having more memory capacity as the first cache 2a is integrated in the server device 8, wherein the first cache 2a is integrated in the mobile client device 7.

The server device 8 and the mobile client device 7 may be coupled by remote connection 9. The remote connection 9 may be a wireless connection, for example using a wireless network like WiFi.

Moreover, the system 1 of Fig. 3 includes an updating unit 10. The updating unit 10 is configured to update the index table 2 using updated predicted visual object models UM, in particular the predicted visual object models M11 - M36 stored in said index table 2. In the example of Fig. 3, the updating unit 10 is configured to update the second cache 2b of the index table 2. Without loss of generality, said updating unit 10 may also, or alternatively, update the first cache 2a. The updating unit 10 may provide said updating based on user inputs UI received by the input device 4 (not shown in Fig. 3) and/or based on an update information received from an external entity (not shown in Fig. 3). Said external entity may be a server or user device that is connectable to the server device 8 by a network, like the Internet.

In Fig. 4, a sequence of method steps S1 - S5 of an embodiment of a method for an industrial simulation of an object using an index transition T1, T2 between visual object models M11 - M36 of an object is depicted.

The method of Fig. 4 has the following method steps S1 - S5:
In step S1, a number N of predicted visual object models M11 - M36 of the object and a corresponding number N of indexes I11 - 136 allocated to the predicted visual object models M11 - M36 are stored in an index table 2 (see Fig. 2, for example).

In step S2, an actual visual object model A of the visual object models M11 - M36 is represented to a user by a representation unit 3.

In step S3, a user input UI for changing the actual visual object model A is received by an input unit 4.

In step S4, a transition information TI indicating an index transition T1, T2 from a first index allocated to the actual visual object model A to a second index allocated to a following visual object model is determined.

In step S5, using the determined transition information TI, the following visual object model is provided from the index table 2 to the representation unit 3 so that it can be represented to the user. Depending on every user input UI or user interaction, a new following visual object model M11 - M36 may be represented to the user.

Although the present invention has been described in accordance with preferred embodiments, it is obvious for the person skilled in the art that modifications are possible in all embodiments.

## Claims

1. A system (1) for an industrial simulation of an object using an indexed transition (T1, T2) between visual object models (M11 - M36) of the object, the system (1) comprising:
an index table (2) for storing a number N of predicted visual object models (M11 - M36) of the object and a number N of indexes (I11 - 136) allocated to the predicted visual object models (M11 - M36),
a representation unit (3) for representing an actual visual object model (A) of the visual object models (M11 - M36) to a user,
an input unit (4) for receiving a user input (UI) for changing the actual visual object model (A) represented to the user,
a determination unit (5) for determining a transition information (TI) indicating an indexed transition (T1, T2) from a first index allocated to the actual visual object model (A) to a second index allocated to a following visual object model, and
a providing unit (6) for providing the following visual object model from the index table (2) to the representation unit (3) using the determined transition information (TI).

2. The system of claim 1,
wherein the index table (2) is configured to store at least one certain allocated index (I11 - 136) for each of the predicted visual object models (M11 - M36).

3. The system of claim 1 or 2,
wherein each of the predicted visual object models (M11 - M36) is mapped to a set of parameters relevant for a simulation of the visual object model (M11 - M36) and its optical adaptation for the representation unit (3).

4. The system of one of claims 1 to 3,
wherein the representation unit (3) and the input unit (4) are configured to provide a direct interaction for the user with the actual visual object model (A) represented by the representation unit (3).

5. The system of one of claims 1 to 4,
wherein the system (1) comprises a client device (7) and a server device (8), wherein the client device (7) integrates the representation unit (3), the input unit (4) and the determination unit (5), and wherein the server device (8) includes the providing unit (6) and at least a part of the index table (2).

6. The system of claim 5,
wherein the server device (8) and the client device (7) are coupled by a remote connection (9).

7. The system of claim 5 or 6,
wherein the input unit (4) includes a dataglove and/or a 3D mouse, and wherein the representation unit (3) includes virtual reality glasses or augmented reality glasses.

8. The system of one of claims 1 to 7,
wherein the index table (2) is configured to use at least two levels of indexing for a coarser change of neighbored visual object models (M11 - M36) of the object and for a finer change of neighbored visual object models (M11 - M36) of the object.

9. The system of claim 8,
wherein the index table (2) includes a first cache (2a) and a second cache (2b), wherein the first cache (2a) is configured for a first level of indexing of the two levels for the coarser change of neighbored visual object models (M11 - M36) and the second cache (2b) is configured for a second level of indexing of the two levels for the finer change of neighbored visual object models (M11 - M36).

10. The system of claim 9,
wherein the first cache (2a) is integrated in the client device (7) and the second cache (2b) is integrated in the server device (8).

11. The system of one of claims 1 to 10,
wherein the visual object model (M11 - M36) is a two-dimensional visual object model or a three-dimensional visual object model.

12. The system of one of claims 1 to 11,
further comprising an updating unit (10) for updating the index table (2) based on user inputs (UI) received by the input device (4) and/or based on an update information received from an external entity.

13. A method for an industrial simulation of an object using an indexed transition (T1, T2) between visual object models (M11 - M36) of the object, the method comprising:
storing (S1) a number N of predicted visual object models (M11 - M36) of the object and a number N of indexes (I11 - 136) allocated to the predicted visual object models (M11 - M36) in an index table (2),
representing (S2) an actual visual object model (A) of the visual object models (M11 - M36) to a user by a representation unit (3),
receiving (S3) a user input (UI) for changing the actual visual object model (A) represented to the user by an input unit (4),
determining (S4) a transition information (TI) indicating an indexed transition (T1, T2) from a first index allocated to the actual visual object model (A) to a second index allocated to a following visual object model, and
providing (S5) the following visual object model from the index table (2) to the representation unit (3) using the determined transition information (TI).

14. A computer program product comprising a program code for executing the method of claim 13 for an industrial simulation of an object using an indexed transition (T1, T2) between visual object models (M11 - M36) of the object when run on at least one computer.

## Amended claims

### Amended claims in accordance with Rule 137(2) EPC.

1. A system (1) configured for an industrial simulation of an object using an indexed transition (T1, T2) between visual object models (M11 - M36) of the object, the system (1) comprising:
an index table (2) for storing a number N of predicted visual object models (M11 - M36) of the object and a number N of indexes (I11 - I36) allocated to the predicted visual object models (M11 - M36),
a representation unit (3) for representing an actual visual object model (A) of the visual object models (M11 - M36) to a user,
an input unit (4) for receiving a user input (UI) for changing the actual visual object model (A) represented to the user,
a determination unit (5) for determining a transition information (TI) indicating an indexed transition (T1, T2) from a first index allocated to the actual visual object model (A) to a second index allocated to a following visual object model including an algorithm unit being adapted to take a set of parameters triggered by input from the input unit and to calculate a right index as an output, and
a providing unit (6) for providing the following visual object model from the index table (2) to the representation unit (3) using the determined transition information (TI).

2. The system of claim 1,
wherein the index table (2) is configured to store at least one allocated index (I11 - I36) for each of the predicted visual object models (M11 - M36).

3. The system of claim 1 or 2,
wherein each of the predicted visual object models (M11 - M36) is mapped to the set of parameters relevant for a simulation of the visual object model (M11 - M36) and its optical adaptation for the representation unit (3).

4. The system of one of claims 1 to 3,
wherein the representation unit (3) and the input unit (4) are configured to provide a direct interaction for the user with the actual visual object model (A) represented by the representation unit (3).

5. The system of one of claims 1 to 4,
wherein the system (1) comprises a client device (7) and a server device (8), wherein the client device (7) integrates the representation unit (3), the input unit (4) and the determination unit (5), and wherein the server device (8) includes the providing unit (6) and at least a part of the index table (2).

6. The system of claim 5,
wherein the server device (8) and the client device (7) are coupled by a remote connection (9).

7. The system of claim 5 or 6,
wherein the input unit (4) includes a dataglove and/or a 3D mouse, and wherein the representation unit (3) includes virtual reality glasses or augmented reality glasses.

8. The system of one of claims 1 to 7,
wherein the index table (2) is configured to use at least two levels of indexing for a coarser change of neighbored visual object models (M11 - M36) of the object and for a finer change of neighbored visual object models (M11 - M36) of the object.

9. The system of claim 8,
wherein the index table (2) includes a first cache (2a) and a second cache (2b), wherein the first cache (2a) is configured for a first level of indexing of the two levels for the coarser change of neighbored visual object models (M11 - M36) and the second cache (2b) is configured for a second level of indexing of the two levels for the finer change of neighbored visual object models (M11 - M36).

10. The system of claim 9,
wherein the first cache (2a) is integrated in the client device (7) and the second cache (2b) is integrated in the server device (8) according to one of the claims 5 to 7.

11. The system of one of claims 1 to 10,
wherein the visual object model (M11 - M36) is a two-dimensional visual object model or a three-dimensional visual object model.

12. The system of one of claims 1 to 11,
further comprising an updating unit (10) for updating the index table (2) based on user inputs (UI) received by the input device (4) and/or based on an update information received from an external entity.

13. A method for an industrial simulation of an object using an indexed transition (T1, T2) between visual object models (M11 - M36) of the object, the method comprising:
storing (S1) a number N of predicted visual object models (M11 - M36) of the object and a number N of indexes (I11 - I36) allocated to the predicted visual object models (M11 - M36) in an index table (2),
representing (S2) an actual visual object model (A) of the visual object models (M11 - M36) to a user by a representation unit (3),
receiving (S3) a user input (UI) for changing the actual visual object model (A) represented to the user by an input unit (4),
determining (S4) a transition information (TI) indicating an indexed transition (T1, T2) from a first index allocated to the actual visual object model (A) to a second index allocated to a following visual object model, wherein the determining includes taking a set of parameters triggered by input from the input unit and calculating a right index as an output by an algorithm unit, and
providing (S5) the following visual object model from the index table (2) to the representation unit (3) using the determined transition information (TI).

14. A computer program product comprising a program code for executing the method of claim 13 for an industrial simulation of an object using an indexed transition (T1, T2) between visual object models (M11 - M36) of the object when run on at least one computer.
